# EUROPEAN PATENT APPLICATION

(11) **EP 4 647 727 A1**
(43) Date of publication of application: **12.11.2025**
(21) Application number: 25173611.2
(22) Date of filing: 30.04.2025
(51) Int. Cl.: G01D 5/245

(54) **COMBINED ROTARY ENCODER**

(30) Priority: 10.05.2024 SI 202400075
(71) Applicant: RLS Merilna tehnika d.o.o., 1218 Komenda (SI)
(72) Inventor: Cerar, Jozef, 1230 Domzale (SI); Brandstaetter, Aljosa, 1000 Ljubljana (SI); Fabris, Sergio, 1000 Ljubljana (SI)
(74) Representative: Macek, Gregor

(57) **Abstract**

A combined rotary encoder of the present invention consists of a combination of components of two known rotary encoders: components of a primary rotary encoder and components of a secondary rotary encoder. The primary rotary encoder comprises a primary scale configured as a ring provided with a track with a periodic pattern, and a primary sensor provided primary sensing elements. The secondary rotary encoder comprises a secondary scale configured as a diametrically polarized permanent magnet, and a secondary magnetic sensor provided with secondary magnetic sensing elements. The combined rotary encoder provides high resolution of the rotation position in the output signal, which is achieved by the primary scale and the primary sensor and a unique reference pulse in the output signal which is provided by the secondary scale and the secondary magnetic sensor.

## Description

The invention relates to a combined rotary encoder which generates a high-resolution incremental output signal with a reference pulse, while at the same time enabling miniaturization of the encoder construction compared to known solutions.

Rotary encoders are devices that detect the physical changes which occur in rotation and translate them into one or several analogue or digital signals from which information about the angle and/or speed of rotation can be extracted using known methods.

There are different types of rotary encoders which can be divided according to the method used to detect a physical change or the type of information recording on a scale as detected by a sensor, for example magnetic, optical, capacitive, inductive or other rotary encoders. Encoders are also classified based on the output signal type, for instance incremental encoders and absolute encoders.

The components of known rotary encoders are particularly a scale and a sensor having one or several sensing elements. The scale comprises at least one track with a pattern from which information on the relative and/or absolute position of the encoder can be determined. The sensor that during the operation rotates along the full rotation with respect to the scale, or vice versa, reads the information and generates one or several sensor signals depending on its position or rotation, which make it possible to detect the information on the relative or absolute rotation of the sensor with respect to the scale, or vice versa.

Rotary encoders are used in a variety of applications, for example in machine tools to determine the angle/position of a tool, in robots to measure joint angles or in electric motors to determine the angle/position of the rotor, which allows these devices to be controlled automatically, for example by software. The sensor in a readhead may be attached to a measured part, while the scale is attached to a base, or vice versa. In certain applications, the angular velocity of the sensor relative to the scale can also be calculated by taking time into account, or vice versa.

Prior art rotary encoders comprise a scale with a track having a periodic pattern. For example, position encoders are known that have 25 periods on the scale over a full rotation (360°), which can be translated into 2,000 distinctive positions per period using known methods for processing signals from the sensing elements. Thus, over the full rotation, 50,000 relative positions can be determined from the output signal of such a rotary encoder, corresponding to the sensor's positions with respect to the scale, which are periodically repeated every 2,000 positions. A track having a periodic pattern may be configured optically, for instance with alternating light and dark segments on the track, wherein optical sensing elements are needed in the sensor for detection. Or, a track may be configured magnetically, for instance with alternating oppositely magnetized segments (north, south) on the track, wherein magnetic sensing elements are needed in the sensor for detection.

Some variants of prior art incremental rotary encoders include one reference mark on the scale within the full rotation. This reference mark is detected by an extra sensor and converted to a reference pulse that represents substantially the initial position of rotation as described for instance in EP2212651B1. By combining the information on the sensor position within a period, the reference pulse and by counting the number of periods of the incremental signals from the reference mark, the absolute position of the sensor with respect to the scale can be calculated retrospectively within the full rotation, or vice versa, if necessary.

A different variant of a rotary encoder is disclosed in SI22966, where the scale is configured as a diametrically polarized permanent magnet positioned in the central axis, while the sensor consists of sensing elements configured as Hall elements arranged substantially on a circle having the centre on the central axis and positioned within the detection range of the permanent magnet, for example above the permanent magnet, the sensor circulating with respect to the permanent magnet, or vice versa, and the centre of movement being on the central axis as well. On the full rotation, the sensor substantially detects a single period of change in the magnetic field, this is why the output signal contains information on the absolute rotation. A disadvantage of such a rotary encoder is that the resolution of the position information in the output signal is lower than that of the previously described rotary encoders which have more periods on the scale. For example, the position encoders having a diametrically polarized magnet only have up to 4,096 distinctive positions per full rotation (360°). In such position encoders the Hall elements and the interpolator circuitry intended to process sensor signals are integrated in a single monolithic semiconductor circuitry, such as a silicon chip.

The combined rotary encoder of the present invention may substantially consist of a combination of components of two known rotary encoders: components of a primary rotary encoder and components of a secondary rotary encoder. The primary rotary encoder comprises a primary scale configured as a ring provided with a track with a periodic pattern, and a primary sensor provided primary sensing elements. The secondary rotary encoder comprises a secondary scale configured as a diametrically polarized permanent magnet, and a secondary magnetic sensor provided with secondary magnetic sensing elements.

The combined rotary encoder provides high resolution of the rotation position in the output signal, which is achieved by the primary scale and the primary sensor and a unique reference pulse in the output signal which is provided by the secondary scale and the secondary magnetic sensor.

One of the essential advantages of the combined rotary encoder of the present invention is also the fact that it enables miniaturization of the entire construction as the diametrically polarized permanent magnet may be positioned within the ring of the primary scale and the secondary magnetic sensor may be formed on the same sensor holder as the primary sensor. As a result, the outer dimensions of the combined rotary encoder issuing an output signal with the information on rotation with suitable resolution and reference pulse do not considerably exceed or do not exceed the outer dimensions of a comparable incremental rotary encoder with the same resolution.

A further advantage is that, in a preferred embodiment, the secondary magnetic sensing elements may be integrated on a monolithic semiconductor circuitry together with a circuitry for processing secondary sensor signals, for instance with a secondary interpolator circuitry.

A more detailed explanation and embodiments of the combined rotary encoder of the invention will be described in the continuation and shown in the following figures:
Figure 1 shows an exploded view of an embodiment of the combined rotary encoder of the invention;
Figure 2 shows a cross-section along a central axis of an embodiment of the combined rotary encoder of the invention;
Figure 3 shows an embodiment of a primary scale configured as a ring having a track with a periodic pattern, a secondary scale configured as a diametrically polarized permanent magnet, and positions of primary sensing elements and secondary sensing elements;
Figure 4 schematically shows an electric connection between a secondary magnetic sensor and a primary sensor of an embodiment of the combined rotary encoder of the invention.

A combined rotary encoder 1 of the present invention comprises:
- a primary scale 2 having a track with a periodic pattern, which has a number of NP periods on the full rotation and is configured in the shape of a ring, the centre of which is put in a central axis 9,
- a primary sensor 3 having primary sensing elements 3a adapted to detect the periodic pattern on the primary scale 2, the primary sensor 3 generating a primary sensor signal which is periodic as a function of the position of the primary sensor with respect to the primary scale 2 and has a number of Nλ periods on the full rotation; the primary sensor signal preferably comprises two primary periodic subsignals SIN1 and COS1 which are phase-shifted relative to each other by substantially π/2,
- a primary interpolator circuitry 11 for processing the primary sensor signal,
- a secondary scale 4 configured as a diametrically polarized permanent magnet positioned in the central axis 9,
- a secondary magnetic sensor 5 comprising secondary magnetic sensing elements 5a, the secondary sensor 5 generating a secondary sensor signal; the secondary sensor signal preferably comprises two secondary periodic subsignals which are phase-shifted relative to each other by π/2,
- a secondary interpolator circuitry 12 for processing the secondary sensor signal.

The track with a periodic pattern on the primary scale 2 may be configured either optically or magnetically. An optically configured track comprises alternating light and dark segments, two adjacent different segments forming one period on the track. In the embodiment of the optical track, optical primary sensing elements 3a in the primary sensor 3 are needed for detection. A magnetically configured track comprises alternating differently magnetized segments (for instance oppositely magnetized segments north, south), wherein in this embodiment the magnetic primary sensing elements 3a in the primary sensor 3 are needed for detection.

The secondary magnetic sensing elements 5a and/or the magnetic primary sensing elements 3a are configured in known ways, for instance by using Hall elements or magnetoresistive (MR) elements.

It is known that in general the number of periods in a sensor signal, in the present case Nλ, is linked to the number of periods NP on the primary scale 2, because the length of the period λ in a sensor signal in known ways depends on the length of the period P on the primary scale 2. For example, in the primary sensing elements 3a configured as Hall elements, the number Nλ substantially equals the number NP. This also holds true for the primary sensing elements 3a which are realized as tunnel magnetoresistive sensing elements. In the primary sensing elements 3a which are realized as anisotropic magnetoresistive sensing elements, the number Nλ is substantially twice the number NP.

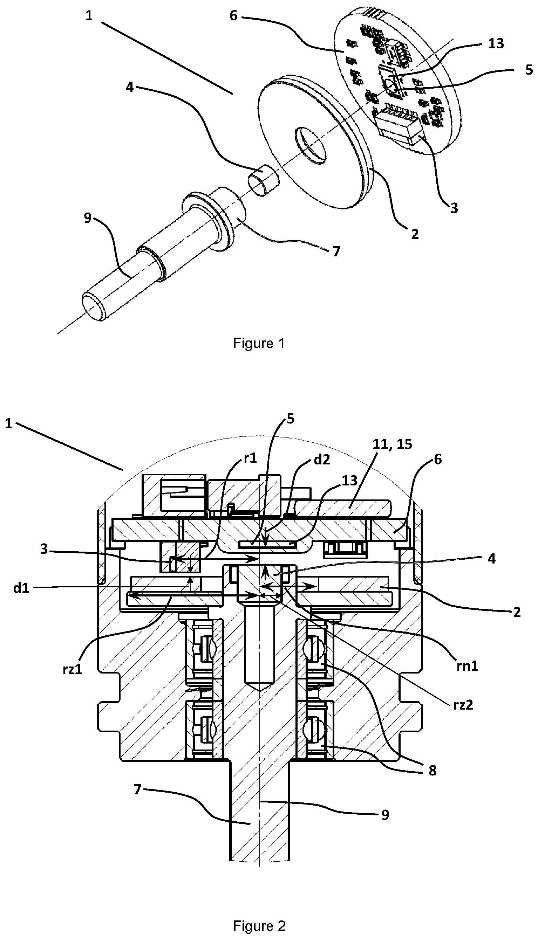

The segments which constitute the periodic pattern of the primary scale 2 can be arranged on the ring in known ways either axially or radially. In the embodiment shown in Figures 1, 2 and 3, the segments of the periodic pattern are axially arranged on the ring. Accordingly, the primary sensor 3 is located above the upper surface of the ring and faces the upper surface of the ring. In an embodiment in which the segments of the periodic pattern are arranged on the ring radially (not shown in the figures), i.e. on the circumference of the ring, the primary sensor 3 is located in known ways next to the ring circumference and faces the ring circumference.

The primary sensor 3 is fixed with respect to the secondary magnetic sensor 5, preferably both are fixed to a sensor holder 6.

The primary scale 2 is fixed with respect to the secondary scale 4, preferably both are fixed to a scale holder 7.

The secondary sensing elements 5a are substantially arranged on the circle with the centre in the central axis 9, preferably substantially equidistantly from each other, the distance between two adjacent secondary sensing elements 5a being equal.

The primary sensing elements 3a in the primary sensor 3 are preferably arranged linearly.

During operation of the combined rotary encoder 1, circular movement of the primary sensor 3 and the secondary magnetic sensor 5 around the central axis 9 relative to the primary scale 2 and the secondary information carrier 4 is enabled in known ways. The primary sensor 3 is at a substantially constant radius r1 relative to the central axis 9 and at a substantially constant distance d1 from the track with a periodic pattern of the primary scale 2.

The signals at the outputs of the primary sensing elements 3a are used in known ways to generate a primary sensor signal that is fed to the primary interpolator circuitry 11 to generate a primary output signal that includes information which make it possible to determine the number N1 of relative distinctive values per period of a primary sensor signal, and a primary reference pulse that is triggered once per period λ of the primary sensor signal, namely in one preset distinctive value of the number N1 of all distinctive values. The resolution of the primary output signal can be represented by the product of numbers N1 and Nλ and is consequently quite high. The primary sensor signal preferably comprises two primary periodic subsignals SIN1 and COS1 which are phase-shifted relative to each other substantially by π/2.

The signals at the outputs from the secondary magnetic sensing elements 5a are used in known ways to generate a secondary sensor signal that is fed to the secondary interpolator circuitry 12 to generate a secondary output signal that includes
- information which may be used to determine the number N2 of distinctive values that correspond to a certain position within the full rotation of the secondary sensor 5 around the secondary scale 4, and
- a secondary reference pulse that is triggered once per full rotation, namely in one preset distinctive value out of the number N2 of all distinctive values.

In a preferred embodiment, as already mentioned, the secondary interpolator circuitry 12 and the secondary sensing elements 5a are integrated in a single monolithic semiconductor circuitry 13. The secondary sensor signal preferably comprises two secondary periodic subsignals SIN2 and COS2 which are phase-shifted relative to each other substantially by π/2.

Within the meaning of the present invention, the secondary reference pulse is used as a coarse reference pulse and is combined with the primary reference pulse using a logical function AND to generate a precise reference pulse that is triggered at a unique position within the full rotation and has the resolution of the primary output signal.

Using the precise reference pulse and the primary output signal it is possible to generate, in known ways, an output signal of the combined rotary encoder 1, which has the resolution of the primary output signal and the unique reference pulse that appears only at one location within the full rotation.

The number N2 of distinctive values of the secondary output signal must be higher than the number Nλ for the coarse reference pulse to trigger with sufficiently high resolution, wherewith it is achieved that the pulse is not active on a section of the rotation that would exceed the rotation by one period A. It is herewith achieved that the precise reference pulse is triggered only once on the full rotation.

The number of primary sensing elements 3a depends on a respective embodiment. In a configuration with Hall elements, for instance, at least two sensing elements 3a are needed per each primary periodic subsignal; preferably four sensing elements 3a are used per each primary periodic subsignal. In a preferred embodiment, in which two primary periodic subsignals (SIN1, COS1) are used, the total number of primary sensing elements 3a is eight. In an embodiment in which the primary sensing elements 3a are configured as magnetoresistive sensing elements, at least four primary sensing elements 3a are needed per each primary periodic subsignal. So, in a preferred embodiment, in which two primary periodic subsignals (SIN1, COS1) are used, at least eight primary sensing elements 3a are needed.

The number of secondary sensing elements 5a depends on embodiments. If the secondary sensing elements 5a are configured as Hall elements, at least four of them are needed, preferably sixteen.

Figures 1, 2 and 3 show an embodiment of the combined rotary encoder 1 in which the fixed position of the primary sensor 3 with respect to the secondary magnetic sensor 5 is made by way of the sensor holder 6 which is configured as a disk-shaped circuit board, to which both sensors 3, 5 are fixedly attached. The centre of the secondary magnetic sensor 5 is aligned with the centre of the sensor holder 6, both being aligned with the central axis 9.

As illustrated in Figure 2, the primary sensor 3 on the sensor holder 6 is fixed at a radius r1 from the central axis 9 so, when in operation, it rotates around the central axis 9 at this radius r1 with respect to the primary scale 2, while simultaneously moving above the track of the primary scale 2 at a constant distance d1 not shown in figures. It is apparent to a person skilled in the art that during operation the primary sensor 3 can be fixed and the primary scale 2 may circulate around the central axis 9 with respect to the primary sensor 3.

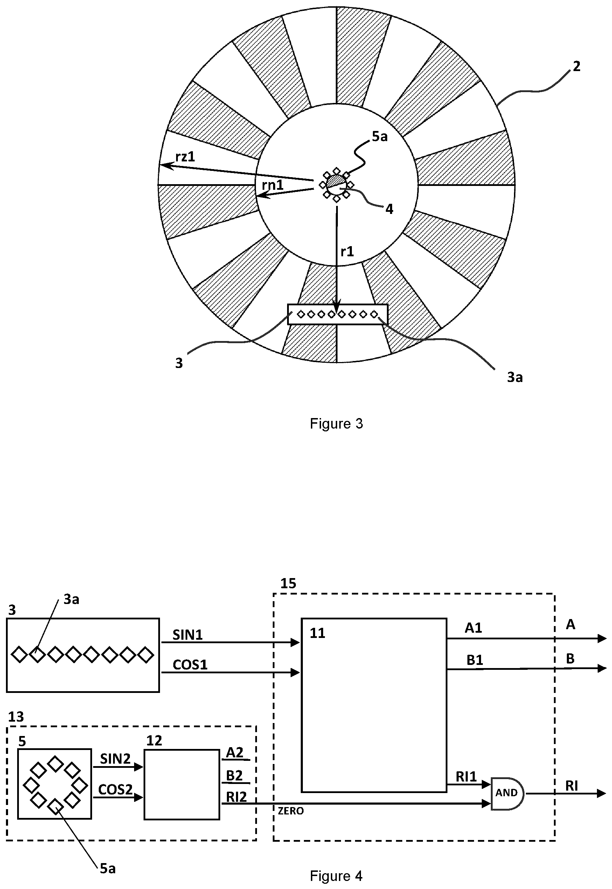

The primary scale 2 is configured in the shape of a ring, which is particularly clear in Figure 1, the upper surface of which is made of a magnetized permanent magnet material, the centre of which is aligned with the central axis 9. The track with a periodic pattern of the primary scale 2 is provided with alternating oppositely magnetized magnetic segments (north, south) which are axially arranged on the circumference as shown in Figure 3. Two adjacent magnetic segments (north, south) form one period on the track. As the segments of the periodic pattern in this embodiment are arranged on the ring axially, the radius r1 of the location of the primary sensor 3 is larger than the inner radius rn1 of the ring and smaller than the outer radius rz1 of the ring. In Figure 3, the secondary scale 4 is shown smaller than its actual size in the embodiment such that the secondary sensing elements 5a are more visible; otherwise the secondary sensing elements 5a in Figure 3 would overlap the secondary scale 4.

The primary sensor 3 in this embodiment comprises sixteen primary sensing elements 3a although only eight are schematically shown in Figures 3 and 4 for better clarity, the sensing elements being arranged linearly and tangentially with respect to the radius r1 as clearly shown particularly in Figure 3. The primary sensing elements 3a are configured as magnetoresistive sensing elements.

The secondary scale 4 is configured as a cylindrical body of a permanent magnet material, which is diametrically magnetized with opposite poles (north, south). The central axis of the cylindrical body is aligned with the central axis 9.

The secondary sensor 5 comprises sixteen secondary magnetic sensing elements 5a although only eight are schematically shown in Figures 3 and 4 for better clarity, the sensing elements being configured as Hall elements. The secondary magnetic sensing elements 5a are arranged on the circle with the radius r2 which is not shown in the figures, the circle having the centre on the central axis 9 preferably substantially at equal distances from each other between two adjacent secondary sensing elements 5a, which is particularly shown in Figure 3. The secondary magnetic sensing elements 5a are at a constant distance d2 to the upper edge of the secondary scale 4 in the form of a cylindrical body, as shown in Figure 2.

In this embodiment, the fixed attachment of the secondary scale 4 with respect to the primary scale 2 is provided by the scale holder 7, the central axis of which is aligned with the central axis 9, as shown in Figures 1 and 2.

The circular movement of the sensor holder 6 with respect to the scale holder 7 around the central axis 9 at constant radii and distances, or vice versa, as descried above, is made possible by way of a bearing subsystem 8 shown in Figure 2.

The outer radius rz2 of the secondary scale 4 shown in Figure 2 is smaller than the inner radius rn1 of the ring of the primary scale 2, this is why, in this embodiment, the secondary scale 4 may be located within the opening of the ring of the primary scale 2. Inter alia, such a configuration enables the miniaturization of the entire combined rotary encoder 1 of the present invention.

In the illustrated embodiment, the sensor holder 6 is configured as a circuit board 6 on which the secondary magnetic sensor 5, the secondary interpolator circuitry 12, the primary sensor 3 and the primary interpolator circuitry 11 are located and connected as will be described hereinbelow. The secondary magnetic sensing elements 5a of the secondary sensor 5 and the secondary interpolator circuitry 12 are integrated in the monolithic semiconductor circuitry 13 attached to the circuit board 6.

In the illustrated embodiment, prior art components are used, namely a MR020C axial incremental ring manufactured by RLS is used as the primary scale 2; a RLC2HD read module manufactured by RLS is used as the primary sensor 3; iC-NQC manufactured by iC-Haus is used as the primary interpolator circuitry 11; a RMM44 diametrically polarized magnet manufactured by RLS is used for the secondary scale 4; and AM4096 manufactured by RLS is used as the secondary magnetic sensor 5 and the secondary interpolator circuitry 12 which are integrated in the monolithic semiconductor circuitry 13.

In this embodiment, the number of NP periods on the primary scale 2 within the full rotation is 10. As a result, the number of periods Nλ in the primary sensor signal on the full rotation is 20.

Figure 4 schematically illustrates an embodiment in which a primary output signal is encoded in known ways in a manner to be read at three outputs A1, B1 and RI1 of the primary interpolator circuitry 11, to which a primary sensor signal that comprises two primary periodic subsignals SIN1 and COS1 is fed. The third output RI1 is dedicated to the primary reference pulse and is triggered only once per each period λ of the primary sensor signal and is defined by one pre-defined relative distinctive value out of N1 of all relative distinctive values. So, the primary reference pulse is triggered Nλ-times on the full rotation.

Out of a plurality of signals from the outputs of the primary sensing elements 3a a primary sensor signal is generated in known ways as a function of rotation, said primary sensor signal comprising two primary periodic subsignals SIN1 and COS1 which are phase-shifted relative to each other substantially by π/2. These two signals are fed to the primary interpolator circuitry 11, in this specific embodiment, this circuitry is included in product 15 designated as iC-NQC of the manufacturer iC-Haus, where through the analog-to-digital conversion and the Arctg function of the ratio of the primary periodic subsignals SIN1 and COS1 a part of the primary output signal is formed at the outputs A1 and B1, with N1 distinctive values per each period λ of the primary sensor signals. In this embodiment the number N1 is 2,000. There are 40,000 (N1 * Nλ) relative distinctive values of the primary output signal on the full rotation, which represents the resolution of the primary output signal.

A similar situation applies to the secondary output signal of this embodiment, too, the circuit of which is shown in Figure 4. Out of a plurality of signals from the secondary magnetic sensing elements 5a a secondary sensor signal is generated in known ways, said secondary sensor signal comprising two secondary periodic subsignals SIN2 and COS2 which are phase-shifted relative to each other substantially by π/2. These two signals are fed to the secondary interpolator circuitry 12, where through the analog-to-digital conversion and the Arctg function of the ratio of the secondary periodic subsignals SIN2 and COS2 one part of the secondary output signal is formed at the outputs A2 and B2, which comprises N2 distinctive values on the full rotation of the secondary sensor with respect to the secondary scale. The secondary output signal on the RI2 output forms a secondary reference signal which is used as a rough reference signal within the meaning of the present invention.

For example, N2 in this embodiment is 64. As mentioned above, one of the known ways of converting two secondary periodic subsignals to a secondary signal is used in this embodiment, which includes use of the secondary interpolator circuitry 12 which is integrated in the monolithic semiconductor circuitry 13, namely in product 13 AM4096 manufactured by RLS. In this embodiment, the secondary interpolator circuitry 12 has three outputs A2, B2 and RI2. The secondary output signal comprises the number N2 of distinctive values on the full rotation. A secondary reference pulse is generated at the output RI2, which is triggered by one pre-defined distinctive value out of all N2 distinctive values within a full rotation. The secondary reference pulse represents a rough reference pulse within the meaning of the present invention. Outputs A2 and B2 are not used within the meaning of the present invention.

In the illustrated embodiment, a combination of the secondary reference pulse and the primary reference pulse through the logical function AND is implemented in product 15 designated as iC-NQC manufactured by iC-Haus, which includes the primary interpolator circuitry, as this product 15 has an additional input designated as "ZERO" which must have the logical state 1 as an additional condition based on which signal RI1, as described above, can appear at the output RI.

Output RI, which, in this embodiment, is the output from product 15, namely iC-NQC manufactured by iC-Haus, represents a precise reference pulse which is triggered only once per full rotation, yet with the resolution of the primary output signal.

The output A1 represents the output A of the combined rotary encoder and the output B2 represents the output B, the output A, the output B and the output RI together generating the output signal of the combined rotary encoder. This output signal includes the precise reference pulse at the output RI, which makes it possible, using known methods, to determine the absolute position of rotation within the full rotation and having the resolution of the primary output signal.

In this embodiment, the number of Nλ periods on the primary scale 2 is 20, so it is lower than the number of N2 states per full rotation which is 64, so in this embodiment, the unique nature of triggering a precise reference pulse at the output RI is ensured, namely exactly once in the full rotation.

Figure 2 clearly shows that the primary interpolator circuitry 11 is arranged at the other side of said circuit board 6 with respect to the position of the primary sensor 3 and the secondary magnetic sensor 5. As mentioned above, the secondary interpolator circuitry 12 in this embodiment is arranged on the same side as the primary sensor 3 and is integrated in the monolithic semiconductor circuitry 13 together with the secondary magnetic sensor 5. This further enables the miniaturization of the whole combined rotary encoder 1 of the present invention.

## Claims

1. A combined rotary encoder (1) comprising
- a primary scale (2) having a track with a periodic pattern configured in the shape of a ring, the centre of which is put in a central axis (9),
- a primary sensor (3) having primary sensing elements (3a) adapted to detect the periodic pattern on the primary scale (2),
- a primary interpolator circuitry (11) for processing the primary sensor signal,
the signals at the outputs of the primary sensing elements (3a) being used to generate a primary sensor signal at the output of the primary sensor (3), which is periodic as a function of the position of the primary sensor (3) with respect to the primary scale (2) and has a number of Nλ periods on the full rotation; the primary sensor signal being fed to the primary interpolator circuitry (11) to generate a primary output signal that includes information which make it possible to determine the number N1 of relative distinctive values per period λ of a primary sensor signal, and a primary reference pulse that is triggered once per period λ of the primary sensor signal, namely in one preset distinctive value of the number N1 of all distinctive values,
**characterized by** comprising
- a secondary scale (4) configured as a diametrically polarized permanent magnet positioned in the central axis (9),
- a secondary magnetic sensor (5) comprising secondary magnetic sensing elements (5a), the secondary sensor (5) generating a secondary sensor signal;
- a secondary interpolator circuitry (12) for processing the secondary sensor signal;
the signals at the outputs of the secondary magnetic sensing elements (5a) being used to generate a secondary sensor signal at the output of the secondary sensor (5) which is fed to the secondary interpolator circuitry (12) to generate a secondary output signal that includes information which make it possible to determine the number N2 of distinctive values within a full rotation, and a secondary reference pulse that is triggered once per full rotation, namely in one preset distinctive value of the number N2 of all distinctive values; the primary sensor (3) being fixed with respect to the secondary magnetic sensor (5) and the primary scale (2) being fixed with respect to the secondary scale (4); wherein, when the combined rotary encoder (1) operates, the primary sensor (3) and the secondary magnetic sensor (5) are enabled to rotate around the central axis (9) with respect to the primary scale (2) and the secondary scale (4), or vice versa, and the primary sensor (3) being substantially at a constant radius (r1) with respect to the central axis (9) and a constant distance (d1) from the track with a periodic pattern of the primary scale (2); wherein the secondary reference pulse is combined with the primary reference pulse using the logical function AND to generate a precise reference pulse that is triggered at a unique position within the full rotation; the number N2 of the distinctive values of the secondary output signal being higher than the number Nλ.

2. The combined rotary encoder (1) according to claim 1, **characterized in that** the primary sensor signal comprises two primary periodic subsignals SIN1, COS1 which are phase-shifted relative to each other substantially by π/2; and the secondary sensor signal comprises two secondary periodic subsignals SIN2, COS2 which are phase-shifted relative to each other substantially by π/2.

3. The combined rotary encoder (1) according to claim 1, **characterized in that** the secondary sensing elements (5a) are substantially arranged on the circle with the centre in the central axis (9) substantially equidistantly from each other between two adjacent secondary sensing elements (5a).

4. The combined rotary encoder (1) according to any of claims 1 to 3, **characterized in that** the segments forming the periodic pattern of the primary scale (2) are axially arranged on the ring, and the primary sensor (3) is located above the upper surface of the ring and faces the upper surface of the ring.

5. The combined rotary encoder (1) according to any of claims 1 to 4, **characterized in that** the track with the periodic pattern on the primary scale (2) is configured magnetically with alternating oppositely magnetized segments and the primary sensor (3) comprises magnetic primary sensing elements (3a).

6. The combined rotary encoder (1) according to any of claims 1 to 5, **characterized in that** the primary sensor (3) and the secondary magnetic sensor (5) are fixed to a sensor holder (6), and the primary scale (2) and the secondary scale (4) are fixed to the scale holder (7).

7. The combined rotary encoder (1) according to claim 6, **characterized in that** the sensor holder (6) is configured as a disc-shaped circuit board.

8. The combined rotary encoder (1) according to claims 6 and 7, **characterized by** comprising a bearing subsystem (8) that enables the circular movement around the central axis (9) of the sensor holder (6) with respect to the scale holder (7), or vice versa.

9. The combined rotary encoder (1) according to claim 7, **characterized in that** the secondary magnetic sensing elements (5a) of the secondary sensor (5) and the secondary interpolator circuitry (12) are integrated in a monolithic semiconductor circuitry (13) attached to the circuit board.

10. The combined rotary encoder (1) according to any of claims 1 to 9, **characterized in that** the secondary scale (4) is configured as a cylindrical body of a permanent magnet material, which is diametrically magnetized with opposite poles (north, south), and the central axis of the cylindrical body is aligned with the central axis (9).

11. The combined rotary encoder (1) according to any of claims 1 to 10, **characterized in that** the primary sensor (3) comprises sixteen sensing elements (3a) arranged linearly and tangentially with respect to the radius (r1) and configured as magnetoresistive sensing elements; the secondary sensor (5) comprising sixteen secondary magnetic sensing elements (5a) configured as Hall elements; the secondary magnetic sensing elements (5a) being at a constant distance (d2) to the upper edge of the secondary scale (4); the outer radius (rz2) of the secondary scale (4) being smaller than the inner radius (rn1) of the ring of the primary scale (2), and the secondary scale (4) being located within the opening of the ring of the primary scale (2).
